# EUROPEAN PATENT APPLICATION

(11) **EP 4 682 028 A1**
(43) Date of publication of application: **21.01.2026**
(21) Application number: 24189417.9
(22) Date of filing: 18.07.2024
(51) Int. Cl.: B62D 21/15, B62D 25/08

(54) **FRONT BODY STRUCTURE OF A VEHICLE**

(71) Applicant: Volvo Car Corporation, 405 31 Göteborg (SE)
(72) Inventor: DOLINSKI, Bartosz, 40531 Göteborg (SE); GRANLUND, Martin, 40531 Göteborg (SE)
(74) Representative: Maiwald GmbH

(57) **Abstract**

The disclosure relates to a front body structure (1) of a vehicle (100), the front body structure (1) comprising a deflector (10), the deflector (10) extending in length along a longitudinal direction (LD) of the front body structure (1), and the deflector (1) comprising a reinforcement member (20) extending in a first direction (FD) inside a cavity (15) of the deflector (10), wherein the reinforcement member (20) along its extension in the first direction (FD) is at least partially spaced apart from opposite inner sides (13a, 14a) of the deflector (10).

## Description

### TECHNICAL FIELD

The present disclosure relates to a front body structure of a vehicle, and a vehicle.

### BACKGROUND

A small overlap crash scenario or frontal severe partial overlap collision, SPOC, may include small overlap crashes with load paths of less than 30% of the vehicle's width and crashes with no front longitudinal members engagement. These crash scenarios or collisions represent an important share of frontal crashes resulting in occupant injuries.

Specifically, the term "small-overlap" refers to accident configurations in which only a small part of the front of the vehicle is hit either by another vehicle or a fixed obstacle. This is referred to as overlap, i.e. with 100% overlap, the entire width of the front of the vehicle is affected in a collision. The small-overlap crash test introduced is typically with 25% overlap (~ headlight width) and was further developed from the previously established moderate-overlap crash test (40% overlap with a deformable barrier) based on investigations into real accidents. Due to the fact that the main crash structures of the front (side members, engine) are missed, the 25% test is still associated with an increased risk of injury for the occupant facing the impact, as the front wheel usually gets caught on the barrier and is pushed into the footwell. In addition, on the driver's side, affected steering components can cause the steering wheel to shift, preventing the airbag from providing optimum protection. Collapse of the passenger cell (A-pillar or door sill) can also be observed in various vehicles.

Design measures can be taken to prevent a pronounced entanglement with the barrier. The vehicle then slides more along the barrier, but this is associated with an increased exit speed from this initial collision, as less energy is absorbed by the front body structure of the vehicle. Specifically, to increase occupant safety for these kinds of crash scenarios or collisions, front body structures of vehicles may be designed according to a glance off strategy, in which the vehicle glances off a barrier with a residual velocity rather than coming to a complete stop. Specifically, a deflector of the front body structure of the vehicle may be used as load path to create a gliding plane to guide the front body structure of the vehicle.

It is desirable that the deflection or gliding plane provided by the deflector of the front body structure is sufficient to reduce the risk of injuries to occupants of the vehicle in such crash scenario or collision.

### SUMMARY

The problem is at least partially solved or alleviated by the subject matter of the independent claims of the present disclosure, wherein further examples are incorporated in the dependent claims.

According to a first aspect of the invention, there is provided a front body structure of a vehicle, the front body structure comprising a deflector, in particular for deflecting the front body structure away from an object intruding into the front body structure during a crash scenario, the deflector extending in length along a longitudinal direction of the front body structure, and the deflector comprising a reinforcement member extending in a first direction inside a cavity of the deflector, wherein the reinforcement member along its extension in the first direction is at least partially spaced apart from opposite inner sides of the deflector.

In the front body structure of the first aspect of the invention, the reinforcement member is added to ensure the structural integrity of the deflector without the need to up-gauge the deflector. Specifically, it has been found that the deflector may rupture in a SPOC load case without reducing extensive deformation of the front body structure und without sufficient structural integrity allowing effective energy dissipation upon impact with the barrier in the SPOC test or with an object, e.g., another vehicle, in a real crash event similar to or according to the SPOC test. The introduction of the reinforcement member inside the deflector has been found to improve the crash performance of the entire area of the front body structure that is being affected by the crash, in particular an outside or outer side area of the front body structure or, more specifically, a fender apron outer frame of the front body structure.

It is important, however, that the reinforcement member is not simply a reinforcement of the existing deflector in a way which would substantially add weight to it, e.g., by increasing the material thickness of the deflector or adding layers of material on the deflector. Instead, a smart lightweight solution is implemented, in which the reinforcement member extends inside a cavity of the deflector. Specifically, the reinforcement member extends in between inner sides of the deflector, in particular at least partially along its extension spaced apart from the inner sides of the deflector. Hence, in case of deformation of the deflector, the reinforcement member is an additional structure that can absorb energy and preventing severe deformation of the deflector as it may deform, in particular freely, within the cavity or, in other words, space inside the deflector. Also, no additional space inside the front body structure needs to be provided inside the front body structure but rather an already existing cavity in the deflector is used. Thereby, the reinforcement member acts as an additional reinforcement inside the deflector or, in other words, increases the structural integrity from inside the deflector. Specifically, the reinforcement member may, in addition to the deflector surrounding it, be deformed for energy dissipation upon impact in a SPOC, thereby significantly strengthening the load path for the deflection or guiding of the front body structure along the barrier or object intruding the front body structure.

With the invention, there is no need to increase the thickness of the deflection, which is usually a large part of the front body structure. Moreover, the reinforcement member can be designed specifically in size, material, and thickness and as described further below, positioned inside the deflector to provide the most optimal solution regarding the weight and cost of the front body structure.

The front body structure may be of any type of a vehicle such as but not limited to a car or truck, for example. The front body structure may be attached to or be part of an entire body structure of the vehicle. The front body structure describes the body structure, or, in other words, the body frame of the vehicle located in the front of the vehicle. The front body structure may house one or more of a drivetrain component (such as an engine), an air conditioning system, a compartment, and similar.

The deflector may alternatively be referred to as a brace member or brace structure. The brace member or brace structure may be also referred to as a front brace member or front brace structure as it is located in the front body structure. Alternatively, the deflector is and may be commonly referred as an apron member, in particular fender apron member and/or apron outer member, or as a shot gun rail, or as an amazon rail. The words member, rail, frame, guide and similar may be used interchangeably herein and have the same meaning of part of the front body structure that is able to be used as load path to create a gliding plane to guide the front body structure of the vehicle in a small overlap crash scenario or frontal severe partial overlap collision, SPOC, specifically along a barrier or intruding object, such as another vehicle. In particular, the deflector may be configured for deflecting the front body structure away from an object, e.g., a barrier or other vehicle, intruding into the front body structure during a crash scenario, in particular in a small overlap crash scenario or frontal severe partial overlap collision. In addition, or alternatively, the deflector may be configured as a load path to create a gliding plane to guide the front body structure of the vehicle in a crash scenario, in particular in a small overlap crash scenario or frontal severe partial overlap collision.

The deflector may in particular be an outer deflector. This means that the deflector is located on or at an outer side or outside of the front body structure. Still, the deflector may be hidden from sight or covered by a cover, specifically a fender, for example. In other words, the deflector may be the outer or outermost part of the front body structure or frame for absorbing energy from a crash scenario or collision, with covers such as a fender merely or primarily having aesthetic and/or pedestrian protection purposes. In the case of a small overlap crash scenario or SPOC, the outer deflector may be impacted by the barrier or intruding object without significantly impacting or only secondarily impacting one or more main load paths, e.g., main load beams, of the front body structure, which may be hit by a full-frontal impact or in case of a higher overlap than 25% or 30%, for example.

The front body structure extends in length along a longitudinal direction, which may be following the length of the vehicle. The longitudinal direction in particular extends from an A-pillar of the vehicle towards a vehicle front. The reinforcement member may extend in length along a second direction which may be substantially following the longitudinal direction or be the same as the longitudinal direction of the deflector. The second direction may be a longitudinal direction of the reinforcement member. Moreover, the reinforcement member has a first direction along which it may additionally to the second direction extend inside the cavity of the deflector. The first direction of the reinforcement member may be transverse to the second direction or longitudinal direction of the deflector. The cavity or, in other words, space inside the deflector may be enclosed by a shell structure comprising one, two or more shell elements, for example.

In an example, the reinforcement member may be attached to the deflector. This further increases the structural integrity of the deflector and reinforcement member. Any attachment method such as but not limited to riveting, fastening with bolts and/or welding may be ued. Specifically, the reinforcement member may be attached at opposite portions thereof to opposite inner sides of the deflector and, in between the attachments, extend spaced apart from opposite inner sides of the deflector, in particular without contacting the deflector or its inner sides.

In an example, the deflector may comprise a beam member surrounding the cavity and at least part of the reinforcement member. In particular, the deflector may be shaped or have the form of a beam. The beam or beam member may have a generally or substantially rectangular cross-section. Thereby, the deflector can absorb significant energies upon impact and deflect the front body structure in a small overlap crash scenario or SCOP. At least part of the reinforcement member refers in particular to the part of the reinforcement member that is spaced apart from the opposite inner sides of the deflector. Other part of the reinforcement members, in particular opposite portions thereof, may be attached to the deflector.

In an example, the beam member may comprise two, in particular angled, shell elements, the two shell elements being attached to one another and the cavity being formed in between the shell elements. Generally, the deflector may be made from metal. The shell elements may also be made from metal and shaped as angled sheets of metal, for example. Also, the beam member or generally the deflector may comprise several shell elements and/or sheet elements along its length. The shell elements may in particular be formed such that these may be attached to further structural elements of the front body structure, such as a strut tower member, pillar member and similar of the front body structure.

In an example, the deflector may be configured as a one shot-type deflector. This means that the deflector may be destroyed upon impact by plastic deformation or, in other words, become a scrap part after a crash or collision impact. In other words, the deflector can only absorb one shot or impact from a crash or collision and may need to be replaced consequently to provide effective occupant protection.

In an example, the front body structure may comprise a pillar member, wherein the deflector comprises a first end attached to the pillar member and a second end opposite the first end, the deflector extending in length between its two ends. The pillar member or frame or structure may for example form or be part of the A-pillar of the front body structure. The pillar member may be extending in length substantially transverse to the extension of the deflector in the longitudinal direction. The second end may be located at or attached to a vehicle front. In particular, the second end may be attached to a vehicle front structure such as but not limited to a front bumper.

In an example, the reinforcement member may along the first direction at least partially extend between two diagonally opposed inner corner areas of the outer deflector. In particular, the reinforcement member may be extending along the first direction between attachment interfaces at which the two shell elements may be attached to one another.

In an example, the reinforcement member may be at least partially formed as a sheet. In other words, the reinforcement member may be at least partially or fully designed or configured as a sheet material, e.g., from metal. This allows for a lightweight yet sufficiently strong reinforcement of the deflector, in particular when arranged between diagonally opposed inner corner areas of the deflector.

In an example, the sheet or, generally, the reinforcement member, may have one or more bends along its extension in the first direction. In other words, the reinforcement member or sheet may be bent ones or multiple times along its extension in the first direction. For example, the reinforcement member or sheet may have a substantially S-shaped extension in the first direction or, in other words, may have a substantially S-shaped cross section. The S-shaped sheet may have two bends. Alternatively, the reinforcement member may only have one bend, multiple bends, e.g., in the form of a wave-shaped sheet, or be substantially straight or planar, i.e., without bends.

In an example, the sheet may comprise a thickness in the range of 0.5 mm to 5 mm, in particular in the range of 0.65 mm to 3.5 mm. A thickness in this range allows for a lightweight yet sufficiently strong reinforcement of the deflector.

In an example, the reinforcement member may be arranged in a middle section of the deflector, the middle section being within a distance from opposite ends of the deflector, the distance being at least 15% of the length of the deflector. This means that the reinforcement member is located somewhere in between 15% and 85% of the length of the deflector. This location has been found to be sufficiently far away from the first end and the second end of the deflector such that the reinforcement member may optimally support the structural integrity of the deflector.

In an alternative or additional example, the front body structure may comprise a strut tower member, wherein the reinforcement member may be arranged in a middle section of the deflector, the middle section being adjacent to the strut tower member. In this alternative or in addition to the above specified distance from the deflector ends, it has been found that the reinforcement member may be optimally positioned to structurally strengthen the deflector. The strut tower member may be configured to have a strut, in particular suspension strut, of a suspension of the vehicle attached thereto to which further components such as a steering knuckle may be attached.

In an example, the reinforcement member may extend in a second direction along the length of the deflector, the second direction being transverse to the first direction, the reinforcement member having an extension in the second direction in the range of 5% to 35%, in particular in the range of 5% to 30%, more particularly in the range of 7% to 25%, of the length of the deflector. Hence, the reinforcement member may be relatively short with respect to the total length of the deflector while still providing for sufficient structural strengthening of the deflector for a crash scenario or collision, in particular when it is positioned in a middle section of the deflector.

In an example, the front body structure may comprise two deflectors located at opposite outer sides of the front body structure. These deflectors, in particular outer deflectors of the front body structure or frame may protect front occupants in small overlap crash scenarios and SPOC seated left and right inside the vehicle.

According to a second aspect, there is provided a vehicle comprising a front body structure.

The front body structure may be part of an entire body structure of the vehicle. The vehicle may further comprise one or more of a drivetrain component (such as an engine), an air conditioning system, a compartment, and similar, which may be located or housed inside or in between the front body structure.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1a: shows a perspective view on a part of a front body structure before a collision with an intruding object;
- Figure 1b: shows the perspective view on the part of the front body structure of Fig. 1a during or after the collision with the intruding object;
- Figure 2a: shows a cross-sectional view on the deflector of the front body structure of Fig. 1a before the collision;
- Figure 2b: shows the cross-sectional view on the deflector of Fig. 2a during the collision; and
- Figure 2c: shows the cross-sectional view on the deflector of Figs. 2a and 2b after the collision.

### DETAILED DESCRIPTION

The Figures are merely schematic representations and serve only to illustrate examples of the disclosure. Identical or equivalent elements are in principle provided with the same reference signs.

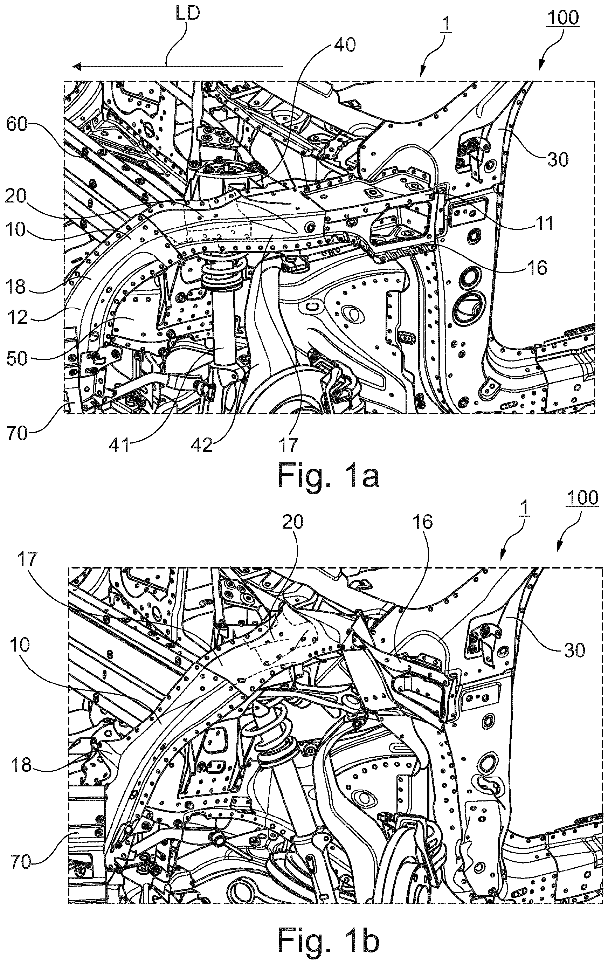

Fig. 1a shows a perspective view on a left side of a front body structure 1 of a vehicle 100 before a collision with an intruding object, e.g., another vehicle or a barrier. The collision or, in other words, crash may be a small overlap crash scenario or frontal severe partial overlap collision, SPOC, for example. A right side of the front body structure 1 may in principle or substantially be designed like the left side explained further below, i.e., with a deflector 10, a reinforcement member 20, a pillar member 30 and so on.

The front body structure 1 comprises a deflector 10 with two opposite ends 11, 12. The first end 11 is attached to a pillar member 30 in form of an A-pillar member 30 of the front body structure 1. The second end 12 is attached to a bumper member 70 of the front body structure 1. Moreover, the deflector 10 may be located adjacent or next to or attached to a strut tower member 40, to which a suspension strut 41 of a suspension of the vehicle 100 may be attached. Exemplary, a steering knuckle 42 which attaches the suspension strut 41 to a wheel of the vehicle 100 is shown in Fig. 1a. Moreover, the front body structure 1 comprises a main load path beam 50 for taking up the forces or energy from an impact of the vehicle 100 in a frontal collision or crash. The main load path beam 50 may be attached to the deflector 10. Also, a cross member 60 of the front body structure 1 may be attached between the two deflectors 10 and/or between two main load path beams 50 located opposite of one another in a direction transverse to the longitudinal direction LD.

The deflector 10 extends in length along a longitudinal direction LD, which may substantially be extending along the length of the vehicle 100. In this example, the deflector 10 is exemplary comprising several sections over the length of the deflector 10. The sections may be individual parts of the deflector 10 that are connected to one another. Alternatively, the sections may be on a deflector 10 made from a single part or piece. Specifically, there is a first section 16 of the deflector 10 attaching to the pillar member 11. Then, there is a middle section 17 or, in other words, central section, located between the first section 16 and a third section 18, which connects the deflector 10 to the bumper member 70.

In an overlap crash scenario, as shown in Fig. 1b by means of the deformation of the deflector 10 by an intruding object, the deflector 10 is configured to deflect the front body structure 1 from the intruding object, preventing large deformations of the front body structure 1 towards the occupants inside the cabin of the vehicle 100. For this purpose, in Figs. 1a and 1b, a reinforcement member 20 is provided inside the deflector 10, which structurally strengthens the deflector 10 to glance or guide off the intruding object along a gliding plane of the deflector 10.

The reinforcement member 20 is shown exemplary to be located in the middle section 17 of the deflector 10. This middle section 17 may be located next to, adjacent to or attached to the strut tower member 40, for example. Also, or alternatively, the reinforcement member 20 may be located at a distance of 15% or more of the first end 11 and/or the second end 12 of the deflector 10. Also, the deflector 10 is configured as a one-shot type deflector 10 such that it plastically deforms upon collision or crash and becomes a scrap part, which needs to be replaced to ensure occupant safety when consequently using the vehicle 100.

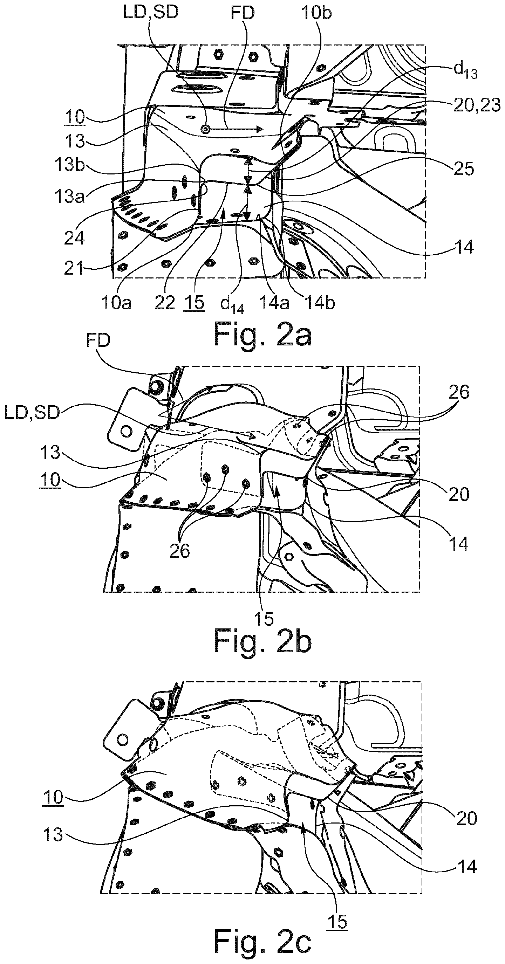

Figs. 2a to 2c show the configuration of the reinforcement member 20 inside the deflector 10 in a cross-sectional view through the middle section 17 for the situation before the crash, during the crash and after the crash.

Fig. 2a shows that the reinforcement member 20 is configured as a sheet, e.g., from metal, disposed inside a cavity 15 formed inside the deflector 10, which comprises or is configured as a beam member. Specifically, the deflector 10 in this example comprises two angled shell elements 13, 14, which are attached to one another and may be further attached to adjacent frames or members of the front body structure 1, such as the strut tower member 40, for example.

As exemplary shown in Fig. 2a, the reinforcement member 20 may be at least partially extending inside the cavity 15 and between two diagonally opposed corner areas 10a, 10b of the deflector 10. In this example, the reinforcement member 20 particular extends from or near a lower outside corner area 10a to an upper inside corner area 10b of the deflector 10. The two angled shell elements 13, 14, in particular angled with a substantially right angle or, in other words, right-angled shell elements 13, 14, may be attached to one another or form attachment interfaces at the diagonally opposed corner areas 10a, 10b. For example, the angled shell elements 13, 14 may be welded, riveted, screw or otherwise attached to one another at the corner areas 10a, 10b. Also, one or both of two opposite portions of the reinforcement members 20 may be attached to one or both of the angled shell elements 13, 14 at the corner areas 10a, 10b. In this example, the reinforcement member 20 is for example attached at one of its end portions with the shell elements 13, 14 at the corner area 10b. The opposite end portion of the reinforcement member 20 is attached to the shell element 13. Fig. 2b shows an example of riveted attachments 26.

The reinforcement member 20 has a thickness in a direction of thickness in the range of 0.5 to 5 mm, for example. Moreover, the reinforcement member 20 extends in a first direction FD transverse to the longitudinal direction LD between the two diagonally opposed corner areas 10a, 10b, in width or length. Transverse thereto, the reinforcement member 20 extends in a second direction SD substantially following or in line with the longitudinal direction LD along with the deflector 10 in length or width respectively.

As seen best in Fig. 2a, the reinforcement member 20 is spaced apart at least in part along its extension in the first direction FD from opposite inner sides 13a, 14a of the deflector 10, specifically of the shell elements 13, 14, which have outer sides 13b, 14b opposite of the inner sides 13a, 14a. The distances d₁₃, d₁₄ shown in Fig. 2a indicate how the reinforcement member 20 is spaced apart from the deflector 10.

In this example, the reinforcement member 20 is substantially S-shaped in cross-section or along the first direction FD with three substantially straight sections 21, 22, 23 and two bends 24, 25 along the shape or first direction FD. Alternatively, the reinforcement member 20 may have no or more bends 24, 25, for example.

Fig. 2b and 2c show the deformation of the deflector 10 and reinforcement member 20 during the crash and after the crash respectively. During and due to the crash, the deflector 10 is plastically deformed and the cavity 15 becomes smaller. Similarly, the reinforcement member 20 plastically deforms and comes closer to the shell elements 13, 14. The reinforcement member 20, as seen in Figs. 2b and 2c, by deformation thereof provides additional structural integrity for the deflection of the intruding object.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: front body structure
- 10: deflector
- 10a, 10b: corner areas
- 11, 12: ends
- 13, 14: shell elements
- 13a, 14a: inner sides
- 13b, 14b: outer sides
- 15: cavity
- 16, 17, 18: sections
- 20: reinforcement member
- 21, 22, 23: sections
- 24,25: bends
- 26: riveted attachment
- 30: pillar member
- 40: strut tower member
- 41: strut
- 42: steering knuckle
- 50: main load path beam
- 60: cross member
- 70: bumper member
- 100: vehicle
- d₁₃, d₁₄: distances
- LD: longitudinal direction
- FD: first direction
- SD: second direction

## Claims

1. A front body structure (1) of a vehicle (100), the front body structure (1) comprising a deflector (10), the deflector (10) extending in length along a longitudinal direction (LD) of the front body structure (1), and the deflector (1) comprising a reinforcement member (20) extending in a first direction (FD) inside a cavity (15) of the deflector (10), wherein the reinforcement member (20) along its extension in the first direction (FD) is at least partially spaced apart from opposite inner sides (13a, 14a) of the deflector (10).

2. The front body structure (1) of claim 1, wherein the reinforcement member (20) is attached to the deflector (10).

3. The front body structure (1) of claim 2, wherein the deflector (10) comprises a beam member surrounding the cavity (15) and at least part of the reinforcement member (20).

4. The front body structure (1) of claim 3, wherein the beam member comprises two angled shell elements (13, 14), the two shell elements (13, 14) being attached to one another and the cavity (15) being formed in between the shell elements (13, 14).

5. The front body structure (1) of any one of the previous claims, wherein the deflector (10) is configured as a one shot-type deflector.

6. The front body structure (1) of any one of the previous claims, wherein the front body structure (1) comprises a pillar member (30), and wherein the deflector (10) comprises a first end (11) attached to the pillar member (30) and a second end (21) opposite the first end (11), the deflector (10) extending in length between its two ends (11, 12).

7. The front body structure (1) of any one of the previous claims, wherein the reinforcement member (20) along the first direction (FD) at least partially extends between two diagonally opposed inner corner areas (10a, 10b) of the deflector (10).

8. The front body structure (1) of any one of the previous claims, wherein the reinforcement member (20) is at least partially formed as a sheet.

9. The front body structure (1) of claim 8, wherein the sheet has one or more bends along its extension in the first direction (FD).

10. The front body structure (1) of claim 8 or 9, wherein the sheet comprises a thickness in the range of 0.5 mm to 5 mm.

11. The front body structure (1) of any one of the previous claims, wherein the reinforcement member (20) is arranged in a middle section (17) of the deflector (10), the middle section (17) being within a distance from opposite ends (11, 12) of the deflector (10), the distance being at least 15% of the length of the deflector (10).

12. The front body structure (1) of any one of the previous claims, wherein the front body structure (1) comprises a strut tower member (40), and wherein the reinforcement member (20) is arranged in a middle section (17) of the deflector (10), the middle section (17) being adjacent to the strut tower member (40).

13. The front body structure (1) of any one of the previous claims, wherein the reinforcement member (20) extends in a second direction (SD) along the length of the deflector (10), the second direction (SD) being transverse to the first direction (FD), the reinforcement member (20) having an extension in the second direction (SD) in the range of 5% to 35% of the length of the deflector (10).

14. The front body structure (1) of any one of the previous claims, wherein the front body structure (1) comprises two outer deflectors (10) located at opposite outer sides of the front body structure (1).

15. A vehicle (100) comprising the front body structure (1) of any one of the previous claims.
